# EUROPEAN PATENT SPECIFICATION

(11) **EP 0 786 786 B1**
(45) Date of publication and mention of the grant of the patent: **03.11.1999**
(21) Application number: 95929268.1
(22) Date of filing: 14.08.1995
(51) Int. Cl.: H01G 9/00, H01G 9/022

(54) **CAPACITOR WITH A DOUBLE ELECTRICAL LAYER**
KONDENSATOR MIT ELEKTRISCHER DOPPELSCHICHT
CONDENSATEUR A COUCHE ELECTRIQUE DOUBLE

(43) Date of publication of application: 30.07.1997
(73) Proprietor: Aktsionernoe Obschestvo Zakrytogo Tipa "Elton", Moscow, 117924 (RU)
(72) Inventor: VARAKIN, Igor Nikolaevich, Saratov, 410017 (RU); STEPANOV, Aleksei Borisovich, Saratov, 410003 (RU); MENUKHOV, Vladimir Vasilievich, Saratov, 410015 (RU)
(74) Representative: Patentanwälte Zellentin & Partner
(86) International application number: PCT/RU95/00171
(87) International publication number: WO 97/07518

(56) References cited:
- WO-A-84/00246
- DE-A- 3 801 719
- US-A- 3 691 433
- US-A- 4 523 255
- US-A- 4 626 964
- US-A- 5 418 682

## Description

### TECHNICAL FIELD

The present invention relates to electrical engineering and may be used for making capacitors accumulating electric energy which are applicable as power sources in various apparatus and devices, e.g. watches, computers, TV sets, radio receivers, and so on, as well as in emergency power supply systems and for starting internal combustion engines, e.g. motor vehicle ones.

More specifically, the present invention relates to capacitors having a double electric layer, i.e. so-called double-layer capacitors.

### BACKGROUND OF THE INVENTION

Double-layer capacitors with liquid electrolyte and electrodes made of various materials having a large specific surface are known in the art (see, e.g. US Patents 4 313 084 and 4 713 734 and DE-A1- 32 10 420). Best results have been obtained when using various activated carbons as electrode material. Specific capacity of such capacitors exceeds 2 F/cm³, while use of aprotic electrolytes allows to increase working voltage up to 2-3 V (see, e.g. US Patent 4 697 224; Nat. Techn. Report, 1980; 26, No. 2, pp. 220-230).

However, use of carbonic materials and organic solvents does not allow obtaining sometimes necessary high power characteristics of double-layer capacitors due to high internal resistance caused by low conductance of carbon and electrolyte. Increased charge-discharge current values of double-layer capacitors are obtained by improvements in construction of capacitor electrodes, e.g. by the use of electrically conducting binder additives and fibrous carbonic materials (see, e.g. Carbon, 1990, 28, No. 4, pp. 477-482; Radio-Fernsehen-Elektro, 1990, 39, No. 2, pp. 77-80).

A double-layer capacitor coming closest to the present invention as to technical essence and obtainable results represents a device made of activated carbon fibres and having polarizable electrodes, as described by W. Halliop et al (see, e.g. Low Cost Supercapacitors. Third International Seminar on double-layer capacitors and similar energy storage devices. Florida, 1993). The capacitors described therein are cylinder-shaped, 7 or 13 mm in diameter and 27 mm high; they have a working voltage of 1.8 V, a capacity from 0.1 to 10 F, and a discharge current up to 1 A. Tablet-form double-layer capacitors being 9.5 mm in diameter and 2.1 mm high are charged to a voltage of 2.4 V and have a capacity of 0.33 F, and an internal resistance of 40 Ohm.

### SUMMARY OF THE INVENTION

Despite a number of the heretofore-known technical solutions concerning improvements in double-layer capacitors, an increase of their specific characteristics still remains a problem to be solved. Thus, in particular, the levels of electrical parameters obtainable in the known capacitors are inadequate in using them for starting internal combustion engines.

The problem mentioned above is solved by the invention described hereinafter in detail. The essence of the invention resides in that in the same capacitor electrodes made of different materials are used, that is, one of the electrodes is made of a fibrous carbonic material (as in conventional double-layer capacitors), whereas the other electrode is made of nickel oxide. Due to such a combination of electrodes the inventors quite unexpectedly could improve many times the main characteristics of the capacitors. Thus, the specific capacity of the capacitors increases 8-10 times. These results can be still more improved if the electrode made of a carbonic material is nickel- or copper-coated until a metal content of up to 9-60 wt.%.

A further feature of the present invention represents the electrolyte used, that is, an aqueous solution of an alkali metal carbonate or hydroxide with a concentration of 0.01-3 and 3-7 mole/l, respectively.

### PREFERRED EMBODIMENTS OF THE INVENTION

The present invention will be illustrated by the following examples.

### EXAMPLE 1

An electrode made of a carbonic web being 0.35 mm thick has a specific surface of 900-2000 m²/g. The current collector is made of perforated nickel foil being 0.05 mm thick.

A cermet nickel oxide electrode being 0.35 mm thick has a specific capacity of 0.4 Ah/cm³. A potassium hydroxide solution with a concentration of 6 mole/l is used as electrolyte, and as separator a capron web being 0.2 mm thick is used. The electrode unit is enclosed in a metal casing having the dimension 50 x 24 x 11 mm and sealed.

### EXAMPLE 2

Example 1 is repeated using a double-layer capacitor having the dimension 26 x 8 x 50 mm.

### EXAMPLE 3

Example 1 is repeated using a carbonic material being nickel-plated by means of an electrolytic method until a nickel content of 20 wt.%. Furthermore a double-layer capacitor having the dimension 50 x 12 x 11 mm is used.

Electrical characteristics of double-layer capacitors according to Examples 1-3 are given in the Table below. In this Table estimated parameters relating to the prior art capacitor described by Halliop et al. are also specified.

**TABLE**

| Example No. | Maximum voltage, V | Capacity, F/cm³ | Internal resistance, Ohm | Energy, J/cm³ | Self-discharge, % per 40 h |
|---|---|---|---|---|---|
| 1 | 1.4 | 46 | 0.0017 | 45 | - |
| 2 | 1.4 | 40 | 0.015 | 39 | 15 |
| 3 | 1.4 | 43 | 0.0007 | 42 | - |
| prior art | 1.25 | 5 | - | 4 | 50 |

From the above Table follows that the double-layer capacitors manufactured in accordance with the present invention exceed many times the prior art capacitor as to its electrical characteristics.

## Claims

1. A double-layer capacitor comprising two electrodes and a liquid electrolyte, **characterized in** that one of the electrodes is made of a fibrous carbonic material, while the other electrode is made of nickel oxide.

2. A capacitor according to claim 1, **characterized in** that one of the electrodes is made of a fibrous carbonic material being nickel- or copper-plated until a content of 9 to 60 wt.%.

3. A capacitor according to claims 1 or 2, **characterized in** that as electrolyte an aqueous solution of an alkali metal carbonate having a concentration of from 0.001 to 3 mole/l is used.

4. A capacitor according to claims 1 or 2, **characterized in** that as electrolyte an aqueous solution of an alkali metal hydroxide having a concentration of from 0.001 to 3 mole/l is used.

## Patentansprüche

1. Doppelschicht-Kondensator mit zwei Elektroden und einem Flüssigelektrolyten,
**dadurch gekennzeichnet**,
daß eine der Elektroden aus einem faserartigen Kohlenstoffmaterial und die andere Elektrode aus Nickeloxid hergestellt ist.

2. Kondensator nach Anspruch 1, **dadurch gekennzeichnet**, daß eine der Elektroden aus einem faserartigen Kohlenstoffmaterial hergestellt ist, das nickel- oder kupferbeschichtet ist bis zu einem Gehalt von 9 bis 60 Gew.-%.

3. Kondensatcr nach Anspruch 1 oder 2, **dadurch gekennzeichnet**, daß als Elektrolyt eine wässrige Lösung eines Alkalimetallkarbonats mit einer Konzentration von 0,001 bis 3 mol/l verwendet ist.

4. Kondensator nach Anspruch 1 oder 2, **dadurch gekennzeichnet**, daß als Elektrolyt eine wässrige Lösung eines Alkalimetallhydroxids mit einer Konzentration von 0,001 bis 3 mol/l verwendet ist.

## Revendications

1. Condensateur à couche double comprenant deux électrodes et un électrolyte liquide, caractérisé en ce qu'une des électrodes est faite d'un matériau de carbone fibreux, tandis que l'autre électrode est faite d'un oxyde de nickel.

2. Condensateur suivant la revendication 1, caractérisé en ce qu'une des électrodes est faite d'un matériau de carbone fibreux qui est plaqué avec du nickel ou du cuivre jusqu'à une teneur de 9 à 60 % en poids.

3. Condensateur suivant la revendication 1 ou 2, caractérisé en ce que, en tant qu'électrolyte, une solution aqueuse d'un carbonate de métal alcalin avec une concentration allant de 0,001 à 3 mole/l est utilisée.

4. Condensateur suivant la revendication 1 ou 2, caractérisé en ce que, en tant qu'électrolyte, une solution aqueuse d'un hydroxyde de métal alcalin avec une concentration allant de 0,001 à 3 mole/l est utilisée.
